# EUROPÄISCHE PATENTSCHRIFT

(11) **EP 2 523 784 B1**
(45) Veröffentlichungstag und Bekanntmachung des Hinweises auf die Patenterteilung: **21.02.2018**
(21) Anmeldenummer: 10787456.2
(22) Anmeldetag: 07.12.2010
(51) Int. Cl.: F16H 57/08, B25F 5/00, F16H 57/021

(54) **HANDGEFÜHRTES ELEKTROWERKZEUG MIT EINEM PLANETENGETRIEBE**
HAND-OPERATED POWER TOOL HAVING A PLANETARY GEAR
OUTIL ÉLECTROPORTATIF AVEC UN ENGRENAGE PLANÉTAIRE

(30) Priorität: 12.01.2010 DE 102010000795
(43) Veröffentlichungstag der Anmeldung: 21.11.2012
(60) Teilanmeldung: 17204965.2
(73) Patentinhaber: Robert Bosch GmbH, 70442 Stuttgart (DE)
(72) Erfinder: GRUNWALD, Michael-Andreas, 70565 Stuttgart-Rohr (DE); WELKE, Joerg, 76275 Ettlingen-Schoellbronn (DE); SAUR, Dietmar, 72810 Gomaringen (DE)
(86) Internationale Anmeldenummer: PCT/EP2010/069033
(87) Internationale Veröffentlichungsnummer: WO 2011/085871

(56) Entgegenhaltungen:
- DE-C1- 10 149 382
- GB-A- 2 335 011
- US-A1- 2005 215 385

## Beschreibung

### Stand der Technik

Die vorliegende Erfindung betrifft ein handgeführtes Elektrowerkzeug mit einem Planetengetriebe, das in einem von einem Getriebegehäuse ausgebildeten Gehäuseinneren angeordnet ist. Ein derartiges Planetengetriebe ist z. B. aus US 2005/0215385 A1 bekannt.

Aus dem Stand der Technik sind derartige handgeführte Elektrowerkzeuge bekannt, bei denen das Getriebegehäuse eines entsprechenden Planetengetriebes mehrteilig aufgebaut ist, wobei die einzelnen Gehäuseteile durch formschlüssige, kraftschlüssige oder stoffschlüssige Verbindungen miteinander verbunden sind. Z. B. sind die Gehäuseteile miteinander verschraubt, verklebt, verschweißt und/oder mittels Federelementen relativ zueinander verspannt. Hierbei erfolgt eine axiale Abstützung des Planetengetriebes im Getriebegehäuse durch eine am Getriebegehäuse befestigte Endkappe.

Darüber hinaus kann das Planetengetriebe derartiger Elektrowerkzeuge zwischen zwei oder mehr Gängen umschaltbar sein. Hierbei ist eine Umschaltmechanik zur Gangumschaltung vorgesehen, mit der ein dem Planetengetriebe zugeordnetes, in einem Gehäusemittelteil angeordnetes Hohlrad z. B. zwischen einer ersten und einer zweiten Betriebsposition verschiebbar ist, wobei die erste Betriebsposition einem ersten Gang und die zweite Betriebsposition einem zweiten Gang des Planetengetriebes zugeordnet ist. Die Umschaltmechanik besteht aus einem Schiebeelement, mit dem ein an der Außenseite des Gehäusemittelteils gelagerter Schwenk- oder Schiebebügel betätigbar ist, der durch Aussparungen in dem Gehäusemittelteil mit dem Hohlrad verbunden ist. Bei einem Verschieben des Schiebeelements wird dieser Bügel von einer ersten Position, die z. B. dem ersten Gang zugeordnet ist, in eine zweite Position, die z. Gang zugeordnet ist, bewegt und verschiebt hierbei das Hohlrad von seiner ersten in die zweite Betriebsposition.

Nachteilig am Stand der Technik ist, dass die Montage derartiger Elektrowerkzeuge bzw. Planetengetriebe aufwändig und kompliziert ist und die Elektrowerkzeuge durch die Vielzahl der miteinander zu verbindenden Bauteile eine vergleichsweise große Toleranzkette aufweisen.

### Offenbarung der Erfindung

Eine Aufgabe der Erfindung ist es daher, ein neues handgeführtes Elektrowerkzeug mit einer reduzierten Toleranzkette bereit zu stellen.

Dieses Problem wird gelöst durch ein handgeführtes Elektrowerkzeug mit einem Planetengetriebe, das in einem von einem Getriebegehäuse ausgebildeten Gehäuseinneren angeordnet ist. Zur axialen Abstützung des Planetengetriebes im Getriebegehäuse ist mindestens ein Querstift im Gehäuseinneren befestigt.

Die Erfindung ermöglicht somit die Bereitstellung eines handgeführten Elektrowerkzeugs mit einem Planetengetriebe, das einen einfachen und robusten Aufbau aufweist.

Das Getriebegehäuse weist bevorzugt eine Gehäusewand auf, an der mindestens zwei Befestigungselemente zur Befestigung des mindestens einen Querstifts vorgesehen sind.

Somit kann eine sichere und zuverlässige Befestigung des Querstifts im Getriebegehäuse erreicht werden.

Der mindestens eine Querstift ist vorzugsweise in zugeordneten Öffnungen der Gehäusewand gelagert.

Somit kann eine stabile und kostengünstige Lagerung des Querstifts im Getriebegehäuse erreicht werden.

Gemäß einer Ausführungsform ist das Planetengetriebe mindestens zwischen einem ersten und einem zweiten Gang umschaltbar. Dem Planetengetriebe ist ein betätigbares Schaltelement zur Gangumschaltung zugeordnet, das im Gehäuseinneren des Getriebegehäuses gelagert ist.

Die Erfindung ermöglicht somit die Bereitstellung eines einfachen und kompakten Getriebegehäuses, bei dem das Schaltelement in das Gehäuse integriert ist und somit auf eine Ausbildung seitlicher Aussparungen am Gehäuse zur Schaltungsansteuerung verzichtet werden kann.

Das Schaltelement ist bevorzugt an dem mindestens einen Querstift gelagert.

Somit können eine zentrische Lagerung sowie eine sichere, direkte Kraftabstützung des Schaltelements im Getriebegehäuse erreicht werden, wobei die axiale Abstützung des Planetengetriebes und die Lagerung des Schaltelements im Getriebegehäuse mit einem einzelnen Bauteil realisiert werden.

Gemäß einer Ausführungsform weist das Schaltelement ein Federelement auf.

Die Erfindung ermöglicht somit eine kostengünstige Ausgestaltung des Schaltelements.

Das Federelement ist in axialer Richtung des Getriebegehäuses vorzugsweise mindestens von einem ersten zu einem zweiten Schaltzustand elastisch verformbar. Der erste Schaltzustand ist dem ersten Gang und der zweite Schaltzustand dem zweiten Gang des Planetengetriebes zugeordnet.

Somit kann ein einfaches und zuverlässiges Schaltelement zur Umschaltung zwischen erstem und zweitem Gang bereitgestellt werden.

Dem Federelement ist bevorzugt ein Betätigungselement zugeordnet, das dazu ausgebildet ist, durch eine Verschiebung in axialer Richtung des Getriebegehäuses eine elastische Verformung des Federelements in axialer Richtung des Getriebegehäuses zu ermöglichen.

Somit ist ein zur Gangumschaltung erforderlicher Schaltweg durch eine mit dem Schaltelement und Betätigungselement versehene Schaltvorrichtung auf einfache Art und Weise auf die axiale Richtung des Getriebegehäuses festlegbar, sodass eine solide Ableitung von bei einer Gangumschaltung auftretenden Kräften über das Getriebegehäuse ermöglicht wird.

Dem Planetengetriebe ist bevorzugt ein Schaltrad zugeordnet, das durch eine Betätigung des Schaltelements zumindest von einer ersten in eine zweite Betriebsposition in axialer Richtung des Getriebegehäuses verschiebbar ist. Die erste Betriebsposition ist dem ersten Gang und die zweite Betriebsposition dem zweiten Gang zugeordnet.

Somit kann eine Schaltvorrichtung mit vergleichsweise reduzierter Toleranzkette bereitgestellt werden.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine schematische Ansicht eines handgeführten Elektrowerkzeugs gemäß einer Ausführungsform,
Fig. 2 eine vergrößerte Schnittansicht eines Ausschnitts des Elektrowerkzeugs von Fig. 1,
Fig. 3 eine vergrößerte perspektivische Ansicht der Schaltvorrichtung von Fig. 2,
Fig. 4 eine perspektivische Ansicht des Getriebegehäuses von Fig. 2 mit der daran vorgesehenen Schaltvorrichtung von Fig. 2, ohne das Betätigungselement von Fig. 2, und
Fig. 5 eine schematische Darstellung eines Schaltvorgangs im Getriebegehäuse von Fig. 2 unter Verwendung der Schaltvorrichtung von Fig. 2.

### Beschreibung der Ausführungsbeispiele

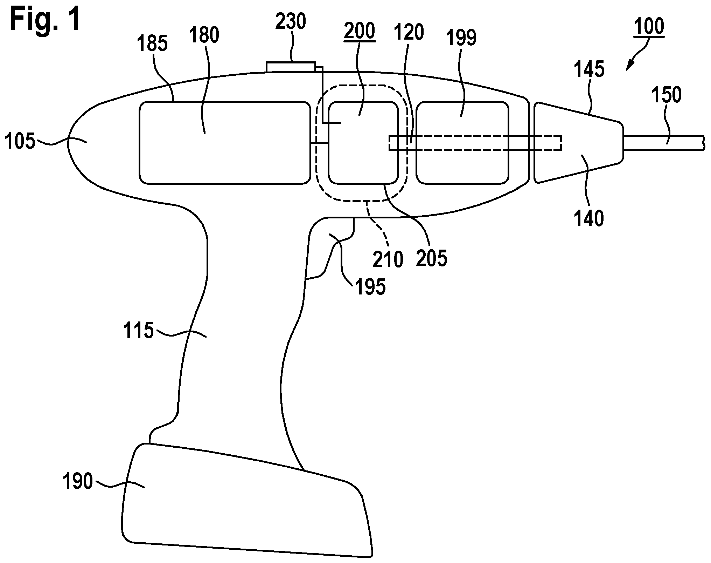

Fig. 1 zeigt ein handgeführtes Elektrowerkzeug 100, das ein Gehäuse 105 mit einem Handgriff 115 aufweist. Gemäß einer Ausführungsform ist das Elektrowerkzeug 100 zur netzunabhängigen Stromversorgung mechanisch und elektrisch mit einem Akkupack 190 verbindbar. In Fig. 1 ist das Elektrowerkzeug 100 beispielhaft als Akku-Bohrschrauber ausgebildet. Es wird jedoch darauf hingewiesen, dass die vorliegende Erfindung nicht auf Akku-Bohrschrauber beschränkt ist, sondern vielmehr bei unterschiedlichen, insbesondere Akku-betriebenen E-lektrowerkzeugen Anwendung finden kann, bei denen ein Werkzeug in Drehungen versetzt wird, z. B. bei einem Akku-Schrauber, einer Akku-Schlagbohrmaschine etc.

In dem Gehäuse 105 sind ein von dem Akkupack 190 mit Strom versorgter, elektrischer Antriebsmotor 180 und ein Getriebe 200 angeordnet. Der Antriebsmotor 180 ist über das Getriebe 200 mit einer Antriebswelle 120, z. B. einer Antriebsspindel, verbunden. Der Antriebsmotor 180 ist illustrativ in einem Motorgehäuse 185 angeordnet und das Getriebe 200 in einem Getriebegehäuse 205, wobei das Getriebegehäuse 205 und das Motorgehäuse 185 beispielhaft in dem Gehäuse 105 angeordnet sind.

Der Antriebsmotor 180 ist z. B. über einen Handschalter 195 betätigbar, d. h. ein- und ausschaltbar, und kann ein beliebiger Motortyp sein, z. B. ein elektronisch kommutierter Motor oder ein Gleichstrommotor. Vorzugsweise ist der Antriebsmotor 180 derart elektronisch steuer- bzw. regelbar, dass sowohl ein Reversierbetrieb, als auch Vorgaben hinsichtlich einer gewünschten Drehgeschwindigkeit realisierbar sind. Die Funktionsweise und der Aufbau eines geeigneten Antriebsmotors sind aus dem Stand der Technik hinreichend bekannt, sodass hier zwecks Knappheit der Beschreibung auf eine eingehende Beschreibung verzichtet wird.

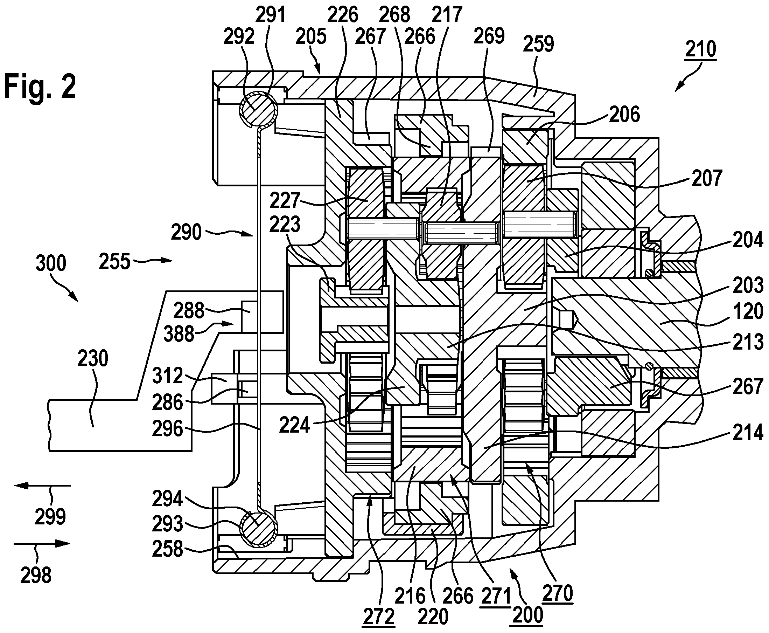

Das Getriebe 200 ist gemäß einer Ausführungsform ein mit verschiedenen Gang- bzw. Planetenstufen ausgebildetes Planetengetriebe, dem optional eine Drehmomentkupplung 199 zugeordnet ist. Das Getriebe 200 ist über ein zugeordnetes Betätigungselement 230 mindestens zwischen einem ersten und einem zweiten Gang umschaltbar. Im Betrieb des Elektrowerkzeugs 100 wird das Planetengetriebe 200 vom Antriebsmotor 180 drehend angetrieben. Das Planetengetriebe 200 wird unten stehend in Bezug auf eine in Fig. 2 vergrößert dargestellte Schnittansicht eines Ausschnitts 210 des Elektrowerkzeugs 100 im Detail beschrieben.

Dem Getriebe 200 ist eine Werkzeugaufnahme 140 zugeordnet, die beispielhaft ein Bohrfutter 145 aufweist. Diese Werkzeugaufnahme 140 dient zur Aufnahme eines Werkzeugs 150 und kann an die von dem Antriebsmotor 180 über das Getriebe 200 antreibbare Antriebswelle 120 angeformt sein oder aufsatzförmig mit dieser verbunden sein.

Fig. 2 zeigt den Ausschnitt 210 des handgeführten Elektrowerkzeugs 100 von Fig. 1. Dieser verdeutlicht eine beispielhafte Ausgestaltung des Planetengetriebes 200.

Das Planetengetriebe 200 weist illustrativ drei in einem von dem Getriebegehäuse 205 ausgebildeten Gehäuseinneren 255 angeordnete Gang- bzw. Planetenstufen auf: eine vordere Stufe 270, eine mittlere Stufe 271 und eine hintere Stufe 272. Die vordere Planetenstufe 270 hat beispielhaft ein Sonnenrad 203, mindestens ein Planetenrad 207, einen Planetenträger bzw. Mitnehmer 204 mit einer Drehmitnahmekontur 267, sowie ein axial und radial unbeweglich im Gehäuseinneren 255 angeordnetes Hohlrad 206. Die mittlere Planetenstufe 271 hat beispielhaft ein Sonnenrad 213, mindestens ein Planetenrad 217, einen Planetenträger 214, sowie ein axial unbeweglich, aber radial beweglich im Gehäuseinneren 255 angeordnetes Hohlrad 216. Der Planetenträger 214 bildet das Sonnenrad 203 der vorderen Planetenstufe 270 aus, wobei das Sonnenrad 203 am Planetenträger 214 auf geeignete Art und Weise befestigt sein kann oder an diesem angeformt bzw. einstückig mit diesem ausgebildet sein kann. Am Außenumfang des Planetenträgers 214 ist illustrativ ein Mitnahmeglied 269 ausgebildet. Die hintere Planetenstufe 272 hat beispielhaft ein Sonnenrad 223, mindestens ein Planetenrad 227, einen Planetenträger 224, sowie ein axial und radial unbeweglich im Gehäuseinneren 255 angeordnetes Hohlrad 226. Der Planetenträger 224 bildet das Sonnenrad 213 der mittleren Planetenstufe 271 aus, wobei das Sonnenrad 213 am Planetenträger 224 auf geeignete Art und Weise befestigt sein kann oder an diesem angeformt bzw. einstückig mit diesem ausgebildet sein kann. Am Außenumfang des Hohlrads 226 ist illustrativ ein Blockierglied 267 ausgebildet.

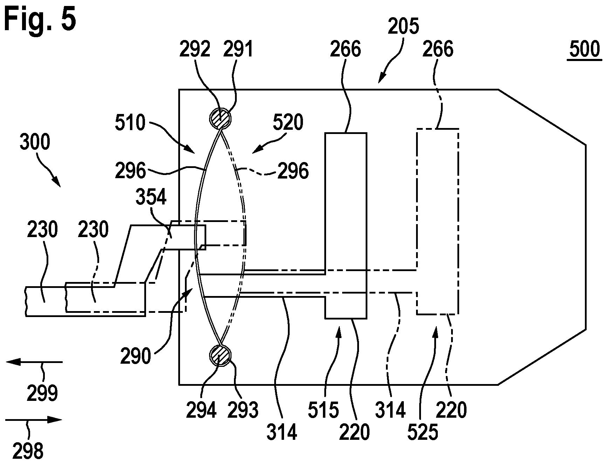

Gemäß einer Ausführungsform ist das Planetengetriebe 200 als Untersetzungsgetriebe ausgebildet, das beispielhaft zwischen einem ersten und einem zweiten Gang umschaltbar ist. Hierzu ist im Gehäuseinneren 255 ein axial verschiebbares und radial bewegliches Schaltrad 266 vorgesehen, das radial unbeweglich bzw. drehfest mit dem Hohlrad 216 der mittleren Planetenstufe 271 verbunden ist. Das Schaltrad 266 ist in axialer Richtung des Getriebegehäuses 205 von einer ersten in eine zweite Betriebsposition verschiebbar, wie unten bei Fig. 5 beschrieben. Hierbei ist die erste Betriebsposition z. B. dem ersten Gang und die zweite Betriebsposition z. B. dem zweiten Gang des Planetengetriebes 200 zugeordnet. Am Innenumfang des Schaltrads 266 ist illustrativ ein Halteelement 268 ausgebildet.

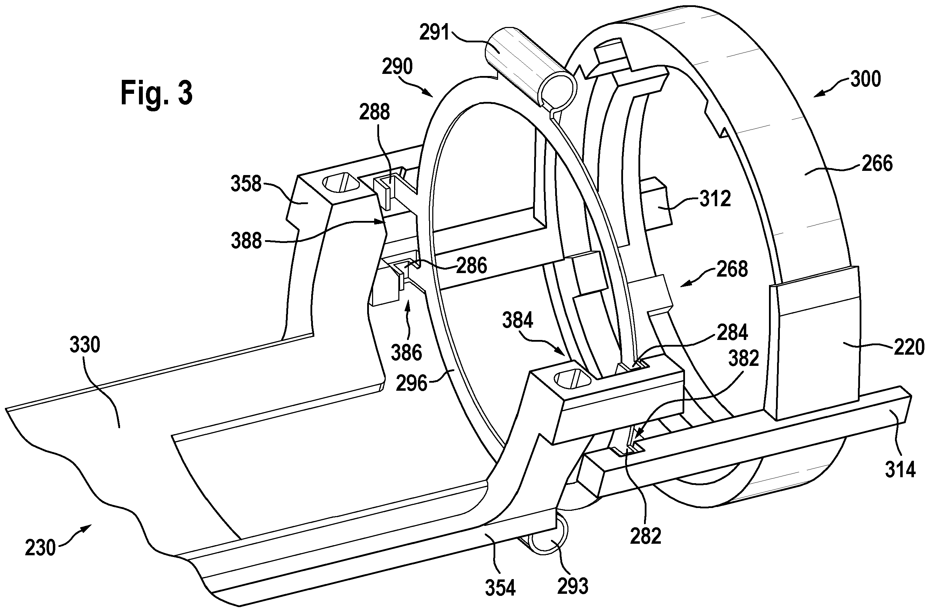

Das Schaltrad 266 ist zumindest abschnittweise in einem Schiebeglied 220 angeordnet. Dieses hat z. B. die Form eines Halbrings mit einem radial einwärts gerichteten U-Profil, in dem das Schaltrad 266 drehbeweglich gelagert ist, wie in Fig. 3 gezeigt. Das Schiebeglied 220 und mit diesem das Schaltrad 266 sind über ein betätigbares Schaltelement 290 zwischen der ersten und zweiten Betriebsposition axial verschiebbar.

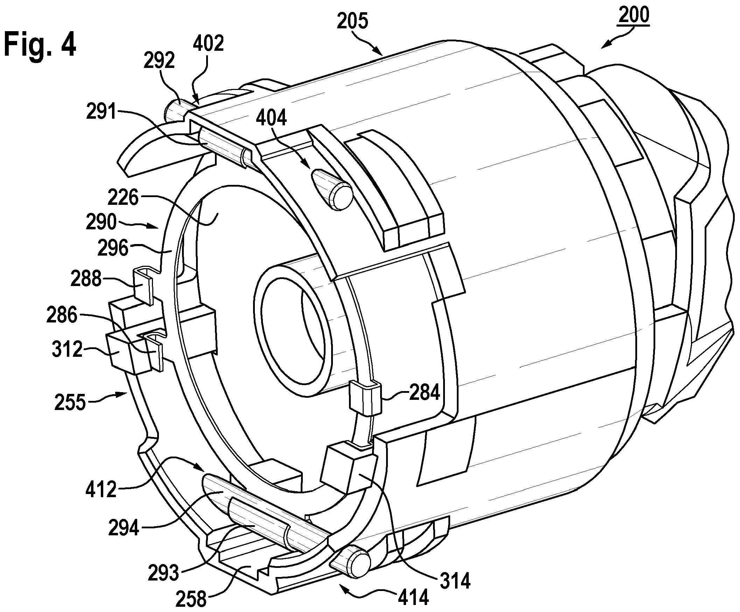

Das Schaltelement 290 hat beispielhaft ein in dem Gehäuseinneren 255 angeordnetes Federelement 296, an dem zwei illustrativ bogenförmige Halteglieder 291, 293 ausgebildet sind, die an einem ersten bzw. einem zweiten Querstift 292 bzw. 294 gelagert sind. Die Querstifte 292, 294 sind zur axialen Abstützung des Planetengetriebes 200 im Gehäuseinneren 255 des Getriebegehäuses 205 befestigt, wie bei Fig. 4 gezeigt, um eine Verschiebung des Planetengetriebes 200 im Getriebegehäuse 205 in Richtung eines Pfeils 299 zu blockieren. Gemäß einer Ausführungsform sind die Querstifte 292, 294 in Richtung des Pfeils 299 hinter dem Hohlrad 226 der hinteren Planetenstufe 272 angeordnet. Illustrativ sind die Querstifte 292, 294 im Bereich einer Innenseite 258 einer Gehäusewand 259 des Getriebegehäuses 205 angeordnet.

Das Federelement 296 ist in axialer Richtung des Getriebegehäuses 205 von einem ersten zu einem zweiten Schaltzustand elastisch verformbar, wie in Fig. 5 gezeigt. Hierbei entspricht der erste Schaltzustand z. B. dem ersten Gang und der zweite Schaltzustand dem zweiten Gang des Planetengetriebes 200. An dem Federelement 296 ist mindestens ein erstes, z. B. U-förmiges Befestigungselement 286 vorgesehen, z. B. angeformt oder einstückig mit diesem ausgebildet, an dem ein erstes, beispielhaft stabförmig ausgebildetes Verbindungselement 312 befestigt ist, das ebenfalls mit dem Schiebeglied 220 verbunden bzw. an diesem befestigt ist. Darüber hinaus ist an dem Federelement 296 mindestens ein zweites, beispielhaft U-förmiges Befestigungselement 288 vorgesehen, z. B. angeformt oder einstückig mit diesem ausgebildet, an dem das Betätigungselement 230 befestigt ist, z. B. über ein Befestigungsglied 388. Dieses Betätigungselement 230 ist dazu ausgebildet, durch eine Verschiebung in axialer Richtung des Getriebegehäuses 205 in Richtung des Pfeils 299 oder eines Pfeils 298 eine elastische Verformung des Federelements 296 in axialer Richtung des Getriebegehäuses 205 zu ermöglichen. Gemäß einer Ausführungsform bilden das Betätigungselement 230, das Schaltelement 290, das Schiebeglied 220, das Hohlrad 266 und das Verbindungselement 312 eine Schaltvorrichtung 300 aus, die in Fig. 3 verdeutlicht ist.

Im Betrieb des Elektrowerkzeugs 100 von Fig. 1 wird das Drehmoment des Antriebsmotors 180 von Fig. 1 über die Planetenstufen 272, 271, 270 des Planetengetriebes 200 mittels der Drehmitnahmekontur 267 des Mitnehmers 204 auf die Antriebswelle 120 übertragen. Hierbei arbeitet das Planetengetriebe 200 gemäß einer Ausführungsform nach Art eines Untersetzungsgetriebes, bei dem im ersten Gang z. B. ein großes Drehmoment und eine kleine Drehgeschwindigkeit auf die Antriebswelle 120 übertragen werden, während im zweiten Gang ein im Vergleich hierzu reduziertes Drehmoment und eine vergrößerte Drehgeschwindigkeit übertragen werden.

Durch eine Verschiebung des Betätigungselements 230 in Richtung des Pfeils 299 wird das Schiebeglied 220 und somit das Schaltrad 266 aus der in Fig. 2 gezeigten Mittelstellung in seine erste Betriebsposition verschoben, die dem ersten Gang zugeordnet ist. In dieser ersten Betriebsposition greift das Halteelement 268 des Schaltrads 266 in das Blockierglied 267 des Hohlrads 226 der hinteren Planetenstufe 272 ein. Somit ist das Schaltrad 266 radial unbeweglich bzw. drehfest mit dem Hohlrad 226 verbunden, sodass ein großes Drehmoment und eine kleine Drehgeschwindigkeit auf die Antriebswelle 120 übertragen werden. Durch eine Verschiebung des Betätigungselements 230 in Richtung des Pfeils 298 wird das Schiebeglied 220 und somit das Schaltrad 266 aus der in Fig. 2 gezeigten Mittelstellung in seine zweite Betriebsposition verschoben, die dem zweiten Gang zugeordnet ist. Somit greift das Halteelement 268 des Schaltrads 266 in das Mitnahmeglied 269 des Planetenträgers 214 der mittleren Planetenstufe 271 ein, sodass das Schaltrad 266 radial beweglich mit dem Planetenträger 214 verbunden wird. Somit können ein im Vergleich zum Betrieb im ersten Gang reduziertes Drehmoment und eine vergrößerte Drehgeschwindigkeit übertragen werden.

Da der Aufbau und die Funktionsweise eines Planetengetriebes mit Gangumschaltung dem Fachmann ausreichend bekannt ist, wird hier zwecks Knappheit der Beschreibung auf eine weitere Beschreibung hiervon verzichtet. Es wird jedoch darauf hingewiesen, dass die in Fig. 2 gezeigte Mittelstellung des Federelements 290 lediglich zur Vereinfachung der Zeichnung und zur Verdeutlichung des Halteelements 268, des Blockierglieds 267 und des Mitnahmeglieds 269 dient. Das Federelements 296 ist gemäß einer Ausführungsform jedoch derart ausgebildet, dass dieses nach einer Montage des Planetengetriebes 200 im Getriebegehäuse 205 bei einer Betätigung des Betätigungselements 230 jeweils automatisch elastisch in seine erste oder zweite Betriebsposition federt und dort selbsthaltend bis zu einer nächsten Betätigung des Betätigungselements 230 verharrt. Deshalb kann das Federelement 296 auch als bistabiles Federelement bezeichnet werden.

Fig. 3 zeigt die Schaltvorrichtung 300 von Fig. 2 mit dem Betätigungselement 230, dem Schaltelement 290, dem Schiebeglied 220, dem Hohlrad 266 und dem Verbindungselement 312. Darüber hinaus weist die Schaltvorrichtung 300 illustrativ ein weiteres, beispielhaft stabförmig ausgebildetes Verbindungselement 314 auf, das das Schaltelement 290 mit dem Schiebeglied 220 verbindet.

Gemäß einer Ausführungsform sind die Verbindungselemente 312, 314 an das Schiebeglied 220 angeformt bzw. einstückig mit diesem ausgebildet. Die Verbindungselemente 312, 314 können jedoch alternativ hierzu auf eine andere geeignete Art und Weise mit dem Schiebeglied 220 verbunden sein, z. B. verklebt oder verschweißt. Darüber hinaus können die Verbindungselemente 312, 314 an dem Schiebeglied 220 verrastet sein oder das Schiebeglied 220 kann in entsprechende, an den Verbindungselementen 312, 314 vorgesehene, nutförmige Ausnehmungen eingepresst sein.

Fig. 3 verdeutlicht eine beispielhafte Ausgestaltung des Halteelements 268 des Schaltrads 266. Dieses ist wie oben beschrieben dazu ausgebildet, in der ersten Betriebsposition des Schaltrads 266 in das Blockierglied 267 des Hohlrads 226 der hinteren Planetenstufe 272 von Fig. 2 und in der zweiten Betriebsposition des Schaltrads 266 in das Mitnahmeglied 269 des Planetenträgers 214 der mittleren Planetenstufe 271 einzugreifen. Hierbei kann das Halteelement 268 eine beliebige Ausgestaltung aufweisen, die diese Funktionalität ermöglicht.

Das Schaltelement 290 weist das illustrativ ringförmig ausgebildete Federelement 296 auf, an dem die bogenförmigen Halteglieder 291, 293, das erste Befestigungselement 288, das zweite Befestigungselement 286, sowie ein drittes Befestigungselement 284 und ein viertes Befestigungselement 282 ausgebildet sind. Das erste Befestigungselement 288 ist wie bei Fig. 2 beschrieben an dem Befestigungsglied 388 befestigt, z. B. verrastet oder eingepresst. Das Befestigungsglied 388 ist an einem ersten lateralen Arm 358 des Betätigungselements 230 ausgebildet. Das dritte Befestigungselement 284 ist an einem Befestigungsglied 384 befestigt, z. B. verrastet oder eingepresst. Das Befestigungsglied 384 ist an einem zweiten lateralen Arm 354 des Betätigungselements 230 ausgebildet. Die lateralen Arme 354, 358 sind in Fig. 3 beispielhaft etwa umgedreht Z-förmig ausgebildet und über ein Verbindungsteil 330 miteinander verbunden.

Das zweite Befestigungselement 286 ist an dem Befestigungsglied 386 des Verbindungselements 312 befestigt, z. B. verrastet oder eingepresst. Das vierte Befestigungselement 282 ist an einem am Verbindungselement 314 vorgesehenen Befestigungsglied 382 befestigt, z. B. verrastet oder eingepresst.

Fig. 4 zeigt das Getriebegehäuse 205 von Fig. 2, in dem das Planetengetriebe 200 von Fig. 2 angeordnet und über die Querstifte 292, 294 axial abgestützt ist. Hierzu sind an der Gehäusewand 259 des Getriebegehäuses 205 Befestigungselemente 402, 404, 412, 414 zur Befestigung der Querstifte 292 bzw. 294 vorgesehen. Diese sind beispielhaft als Öffnungen in der Gehäusewand 259 ausgebildet, in denen die Querstifte 292 bzw. 294 gelagert sind. Hierbei können die Querstifte 292, 294 in den Öffnungen 402, 404 bzw. 412, 414 befestigt sein, z. B. eingepresst, verklebt oder verschweißt.

An den Querstiften 292, 294 ist das vollständig im Gehäuseinneren 255 angeordnete, federnde Schaltelement 290 über die bogenförmigen Halteelemente 291 bzw. 293 gelagert. Das Schaltelement 290 ist wie bei Fig. 2 und 3 beschrieben über die Verbindungsstege 312, 314 mit dem Schiebeglied 220 verbunden, in dem das Schaltrad 266 drehbar gelagert ist.

Fig. 5 zeigt eine stark vereinfachte Darstellung 500 mit der Schaltvorrichtung 300 und dem Getriebegehäuse 205 von Fig. 2 zur Verdeutlichung der Funktionsweise. Hierbei sind das Betätigungselement 230, das Federelement 296, der Verbindungsstab 314, das Schiebeglied 220 und das Schaltrad 266 in durchgezogenen Linien im Getriebegehäuse 205 in einer hinteren Position gezeigt, die einem ersten Schaltzustand 510 des Federelements 296 bzw. einer ersten Betriebsposition 515 des Schaltglieds 220 entspricht, die dem ersten Gang des Planetengetriebes 200 von Fig. 2 zugeordnet sind.

Durch eine axiale Verschiebung des Betätigungselements 230 in Richtung des Pfeils 298 wird eine elastische Verformung des Federelements 296 in einen zweiten Schaltzustand 520 bewirkt, wobei das Schiebeglied 220 und das Schaltrad 266 axial in Richtung des Pfeils 298 in eine zweite Betriebsposition 525 verschoben werden, die dem zweiten Gang des Planetengetriebes 200 von Fig. 2 zugeordnet ist. Diese vordere Position der Schaltvorrichtung 300 ist zur Verdeutlichung gestrichelt dargestellt. Darüber hinaus sind die durchgezogene und die gestrichelte Darstellung zur Vereinfachung der Unterscheidung leicht versetzt zueinander dargestellt.

Durch eine axiale Verschiebung des Betätigungselements 230 in Richtung des Pfeils 299 kann die Schaltvorrichtung 300 wieder in die hintere Position verschoben werden. Somit kann durch axiale Verschiebung des Betätigungselements 230 in Richtung des Pfeils 299 oder 298 jeweils eine Umschaltung vom ersten zum zweiten Gang oder umgekehrt des Planetengetriebes 200 von Fig. 2 erfolgen.

## Patentansprüche

1. Handgeführtes Elektrowerkzeug (100) mit einem Planetengetriebe (200), das in einem von einem Getriebegehäuse (205) ausgebildeten Gehäuseinneren (255) angeordnet ist, **dadurch gekennzeichnet, dass** zur axialen Abstützung des Planetengetriebes (200) im Getriebegehäuse (205) mindestens ein Querstift (292, 294) im Gehäuseinneren (255) befestigt ist.

2. Elektrowerkzeug nach Anspruch 1, **dadurch gekennzeichnet, dass** das Getriebegehäuse (205) eine Gehäusewand (259) aufweist, an der mindestens zwei Befestigungselemente (402, 404, 412, 414) zur Befestigung des mindestens einen Querstifts (292, 294) vorgesehen sind.

3. Elektrowerkzeug nach Anspruch 1 oder 2, **dadurch gekennzeichnet, dass** der mindestens eine Querstift (292, 294) in zugeordneten Öffnungen (402, 404, 412, 414) der Gehäusewand (259) gelagert ist.

4. Elektrowerkzeug nach einem der vorhergehenden Ansprüche, **dadurch gekennzeichnet, dass** das Planetengetriebe (200) mindestens zwischen einem ersten und einem zweiten Gang umschaltbar ist, wobei dem Planetengetriebe (200) ein betätigbares Schaltelement (290) zur Gangumschaltung zugeordnet ist, das im Gehäuseinneren (255) des Getriebegehäuses (205) gelagert ist.

5. Elektrowerkzeug nach Anspruch 4, **dadurch gekennzeichnet, dass** das Schaltelement (290) an dem mindestens einen Querstift (292, 294) gelagert ist.

6. Elektrowerkzeug nach Anspruch 4 oder 5, **dadurch gekennzeichnet, dass** das Schaltelement (290) ein Federelement (296) aufweist.

7. Elektrowerkzeug nach Anspruch 6, **dadurch gekennzeichnet, dass** das Federelement (296) in axialer Richtung des Getriebegehäuses (205) mindestens von einem ersten zu einem zweiten Schaltzustand (510, 520) elastisch verformbar ist, wobei der erste Schaltzustand (510) dem ersten Gang und der zweite Schaltzustand (520) dem zweiten Gang des Planetengetriebes (200) zugeordnet ist.

8. Elektrowerkzeug nach Anspruch 6 oder 7, **dadurch gekennzeichnet, dass** dem Federelement (296) ein Betätigungselement (230) zugeordnet ist, das dazu ausgebildet ist, durch eine Verschiebung in axialer Richtung des Getriebegehäuses (205) eine elastische Verformung des Federelements (296) in axialer Richtung des Getriebegehäuses (205) zu ermöglichen.

9. Elektrowerkzeug nach einem der Ansprüche 4 bis 8, **dadurch gekennzeichnet, dass** dem Planetengetriebe (200) ein Schaltrad (266) zugeordnet ist, das durch eine Betätigung des Schaltelements (290) zumindest von einer ersten in eine zweite Betriebsposition (515, 525) in axialer Richtung des Getriebegehäuses (205) verschiebbar ist, wobei die erste Betriebsposition (515) dem ersten Gang und die zweite Betriebsposition (525) dem zweiten Gang zugeordnet ist.

## Claims

1. Hand-operated power tool (100) having a planetary gearing (200) which is arranged in a housing interior (255) formed by a gearing housing (205), **characterized in that** at least one transverse pin (292, 294) is fastened in the housing interior (255) for axially supporting the planetary gearing (200) in the gearing housing (205).

2. Power tool according to Claim 1, **characterized in that** the gearing housing (205) has a housing wall (259) on which at least two fastening elements (402, 404, 412, 414) for fastening the at least one transverse pin (292, 294) are provided.

3. Power tool according to Claim 1 or 2, **characterized in that** the at least one transverse pin (292, 294) is mounted in associated openings (402, 404, 412, 414) of the housing wall (259).

4. Power tool according to one of the preceding claims, **characterized in that** the planetary gearing (200) is changeable at least between a first and a second gear, wherein the planetary gearing (200) is assigned an actuable changing element (290) for changing gear, said changing element being mounted in the housing interior (255) of the gearing housing (205).

5. Power tool according to Claim 4, **characterized in that** the changing element (290) is mounted on the at least one transverse pin (292, 294).

6. Power tool according to Claim 4 or 5, **characterized in that** the changing element (290) has a spring element (296).

7. Power tool according to Claim 6, **characterized in that** the spring element (296) is elastically deformable in the axial direction of the gearing housing (205) at least from a first to a second changing state (510, 520), wherein the first changing state (510) is assigned to the first gear and the second changing state (520) is assigned to the second gear of the planetary gearing (200).

8. Power tool according to Claim 6 or 7, **characterized in that** the spring element (296) is assigned an actuating element (230) which is designed to permit an elastic deformation of the spring element (296) in the axial direction of the gearing housing (205) by displacement in the axial direction of the gearing housing (205).

9. Power tool according to one of Claims 4 to 8, **characterized in that** the planetary gearing (200) is assigned a changing wheel (266) which, by actuation of the changing element (290), is displaceable at least from a first into a second operating position (515, 525) in the axial direction of the gearing housing (205), wherein the first operating position (515) is assigned to the first gear and the second operating position (525) to the second gear.

## Revendications

1. Outil électrique manuel (100) comprenant un engrenage planétaire (200), qui est disposé dans un intérieur de boîtier (255) réalisé par un boîtier de transmission (205), **caractérisé en ce que** pour le support axial de l'engrenage planétaire (200) dans le boîtier d'engrenage (205), au moins une goupille transversale (292, 294) est fixée dans l'intérieur de boîtier (255).

2. Outil électrique selon la revendication 1, **caractérisé en ce que** le boîtier de transmission (205) présente une paroi de boîtier (259) au niveau de laquelle au moins deux éléments de fixation (402, 404, 412, 414) sont prévus pour la fixation de l'au moins une goupille transversale (292, 194).

3. Outil électrique selon la revendication 1 ou 2, **caractérisé en ce que** l'au moins une goupille électrique (292, 294) est supportée dans des ouvertures associées (402, 404, 412, 414) de la paroi de boîtier (259).

4. Outil électrique selon l'une quelconque des revendications précédentes, **caractérisé en ce que** l'engrenage planétaire (200) peut être commuté au moins entre un premier et un deuxième rapport, un élément de commutation (290) pour le changement de rapports, lequel est supporté dans l'intérieur de boîtier (255) du boîtier de transmission (205) étant associé à l'engrenage planétaire (200).

5. Outil électrique selon la revendication 4, **caractérisé en ce que** l'élément de commutation (290) est supporté au niveau de l'au moins une goupille transversale (292, 294).

6. Outil électrique selon la revendication 4 ou 5, **caractérisé en ce que** l'élément de commutation (290) présente un élément de ressort (296).

7. Outil électrique selon la revendication 6, **caractérisé en ce que** l'élément de ressort (296) peut être déformé élastiquement dans la direction axiale du boîtier de transmission (205) au moins depuis un premier état de commutation jusqu'à un deuxième état de commutation (510, 520), le premier état de commutation (510) étant associé au premier rapport et le deuxième état de commutation (520) étant associé au deuxième rapport de l'engrenage planétaire (200).

8. Outil électrique selon la revendication 6 ou 7, **caractérisé en ce qu'**un élément d'actionnement (230) est associé à l'élément de ressort (296), lequel est réalisé de manière à permettre, par un déplacement dans la direction axiale du boîtier de transmission (205), une déformation élastique de l'élément de ressort (296) dans la direction axiale du boîtier de transmission (205).

9. Outil électrique selon l'une quelconque des revendications 4 à 8, **caractérisé en ce qu'**une roue de commutation (266) est associée à l'engrenage planétaire (200), laquelle peut être déplacée par un actionnement de l'élément de commutation (290) au moins d'une première position de fonctionnement dans une deuxième position de fonctionnement (515, 525) dans la direction axiale du boîtier de transmission (205), la première position de fonctionnement (515) étant associée au premier rapport et la deuxième position de fonctionnement (525) étant associée au deuxième rapport.
